Europäisches Patentamt

European Patent Office

Office européen des brevets

(19)

(11) Numéro de publication : **0 068 987**
**B1**

(12)

# FASCICULE DE BREVET EUROPÉEN

(45) Date de publication du fascicule du brevet :
**19.12.84**

(21) Numéro de dépôt : **82401108.4**

(22) Date de dépôt : **18.06.82**

(51) Int. Cl.³ : **G 21 C  1/02, F 16 L 27/04**

(54) **Dispositif de jonction entre le conduit de refoulement d'une pompe primaire et un conduit solidaire du support de coeur d'un réacteur nucléaire à neutrons rapides.**

(30) Priorité : **19.06.81 FR 8112084**

(43) Date de publication de la demande :
**05.01.83 Bulletin 83/01**

(45) Mention de la délivrance du brevet :
**19.12.84 Bulletin 84/51**

(84) Etats contractants désignés :
**BE DE GB IT NL**

(56) Documents cités :
**FR-A- 2 326 011**
**FR-A- 2 357 987**
**FR-A- 2 370 344**
**FR-A- 2 388 375**
**FR-A- 2 419 393**

(73) Titulaire : **NOVATOME**
**20 Avenue Edouard Herriot**
**F-92350 Le Plessis Robinson (FR)**

(72) Inventeur : **Julien, Georges**
**Parc Lormoy-Jura rue du Haras**
**F-91240 St. Michel sur Orge (FR)**
Inventeur : **Thevenin, Michel**
**11 allée du Mail**
**F-94260 Fresnes (FR)**

(74) Mandataire : **Bouget, Lucien et al**
**CREUSOT-LOIRE 15 rue Pasquier**
**F-75383 Paris Cedex 08 (FR)**

Jouve, 18, rue St-Denis, 75001 Paris, France

## Description

L'invention concerne un dispositif de jonction entre le conduit de refoulement d'une pompe primaire et un conduit solidaire du support de cœur d'un réacteur à neutrons rapides refroidi par un métal liquide.

Dans ce type de réacteur, le métal liquide constitue le fluide primaire qui permet le refroidissement des assemblages combustibles dégageant de la chaleur et constituant le cœur du réacteur.

La chaleur du cœur est prélevée par le métal liquide, généralement du sodium liquide, qui est envoyé à la base du cœur par les pompes primaires qui peuvent être soit plongées dans le sodium liquide remplissant la cuve du réacteur, dans le cas d'un réacteur nucléaire intégré, soit disposées à l'extérieur de la cuve, dans le cas d'un réacteur nucléaire à boucles.

Le sodium liquide échauffé par le cœur du réacteur pénètre dans des échangeurs de chaleur permettant l'échauffement d'un second métal liquide constituant le fluide secondaire qui lui-même est utilisé pour la production de vapeur dans les générateurs de vapeur.

A sa sortie des échangeurs de chaleur, le fluide primaire refroidi pénètre dans une zone de la cuve d'où il est, grâce aux pompes primaires, réinjecté à la base du cœur du réacteur.

Le sodium refroidi dans les échangeurs de chaleur, ou sodium froid, est néanmoins à une température supérieure à 300°, si bien que les pompes primaires subissent des dilatations, lorsque le réacteur nucléaire est en fonctionnement.

De plus, la température du fluide primaire n'est pas constante au cours du fonctionnement du réacteur et en conséquence la dilatation des différentes parties de la pompe est variable.

En outre, les pompes et leurs accessoires subissent des vibrations dues en particulier à la circulation à grande vitesse du sodium liquide.

Dans les réacteurs nucléaires du type intégré, en particulier, où les pompes primaires injectent le métal liquide dans des conduits solidaires du support de cœur, il est nécessaire de réaliser à la fois la continuité de circulation de ce sodium liquide entre la pompe et le conduit solidaire du support et de permettre des déplacements de la pompe par rapport au support de cœur, ou sommier, sur lequel reposent les assemblages combustibles et qui permet leur alimentation en sodium.

Pour réaliser ces fonctions, on utilise généralement une manchette de liaison fixée d'une part sur le conduit de refoulement de la pompe et d'autre part sur le sommier, de façon non rigide, et débouchant dans le conduit solidaire du sommier.

Une telle manchette cylindrique ne permet cependant pas de régler les vitesses d'écoulement du métal liquide avant son injection dans le conduit solidaire du sommier.

En outre, pour permettre les déplacements transversaux par rapport à l'écoulement, il est nécessaire de réaliser un montage à cardan de l'ensemble de la pompe ce qui complique la construction et la fixation de celle-ci.

Enfin, on ne peut pas assurer un montage de la pompe à la fois suffisamment souple pour absorber les déplacements et suffisamment rigide et résistant mécaniquement pour résister aux diverses sollicitations (séismes en particulier).

Le but de l'invention est donc de proposer un dispositif de jonction entre le conduit de refoulement d'une pompe primaire et un conduit solidaire du support de cœur d'un réacteur nucléaire à neutrons rapides refroidi par un métal liquide, le métal liquide constituant le fluide primaire du réacteur étant envoyé à la base du cœur par des pompes primaires qui injectent le métal liquide dans des conduits solidaires du support de cœur, pour le refroidissement de ce cœur, ce dispositif de jonction devant permettre des déplacements suffisants de la pompe par rapport au support de cœur pendant le fonctionnement du réacteur tout en assurant une jonction constante et résistant aux sollicitations mécaniques, en particulier aux vibrations, assurant un certain réglage des vitesses du métal liquide avant son injection dans le conduit solidaire du support de cœur.

Dans ce but, le dispositif de jonction suivant l'invention comporte :

— une manchette de forme tronconique disposée dans le prolongement du conduit de refoulement de la pompe dont la petite base est située au voisinage de la sortie du conduit de refoulement et la grande base au voisinage de l'entrée du conduit solidaire du support de cœur,

— une pièce de liaison solidaire de la manchette au niveau de sa petite base et symétrique de révolution autour de l'axe de la manchette, portant à sa partie centrale, au voisinage de l'axe de symétrie, la partie mobile d'un moyen de liaison articulé dont la partie fixe est portée par la pompe permettant à la fois des débattements latéraux et le maintien de la manchette sur le conduit de la pompe malgré les efforts axiaux, la partie périphérique de la pièce de liaison d'un diamètre supérieur au diamètre de la petite base de la manchette présentant une surface sphérique symétrique autour de l'axe de la manchette complémentaire d'une surface correspondante usinée à l'extrémité du conduit de refoulement de la pompe, l'étanchéité entre ces deux surfaces disposées l'une contre l'autre étant assurée par un joint à labyrinthe cependant que la pression du métal liquide refoulé par la pompe s'exerçant sur la partie de cette pièce de liaison comprise entre sa partie périphérique et sa partie fixée à sa manchette permet d'exercer une force de direction axiale sur la manchette,

— un dispositif d'étanchéité intercalé entre l'extrémité de sortie de la manchette et le conduit solidaire du support de cœur dont l'extrémité sur laquelle est engagée l'extrémité de sortie de la manchette est d'un diamètre différent de celui de l'extrémité de la manchette,

— un moyen élastique intercalé entre l'extrémité de la manchette et une pièce d'appui solidaire du support de cœur sur toute la périphérie de la manchette pour le maintien latéral de cette manchette dont l'extrémité de sortie peut se déplacer librement dans la direction axiale par rapport au conduit solidaire du support de cœur.

Afin de bien faire comprendre l'invention, on va maintenant décrire à titre d'exemple non limitatif un mode de réalisation du dispositif de jonction suivant l'invention utilisé dans le cas d'un réacteur nucléaire intégré, pour joindre le conduit de refoulement de la pompe disposé verticalement, au conduit solidaire du sommier sur lequel reposent les assemblages disposé en dessous de la pompe.

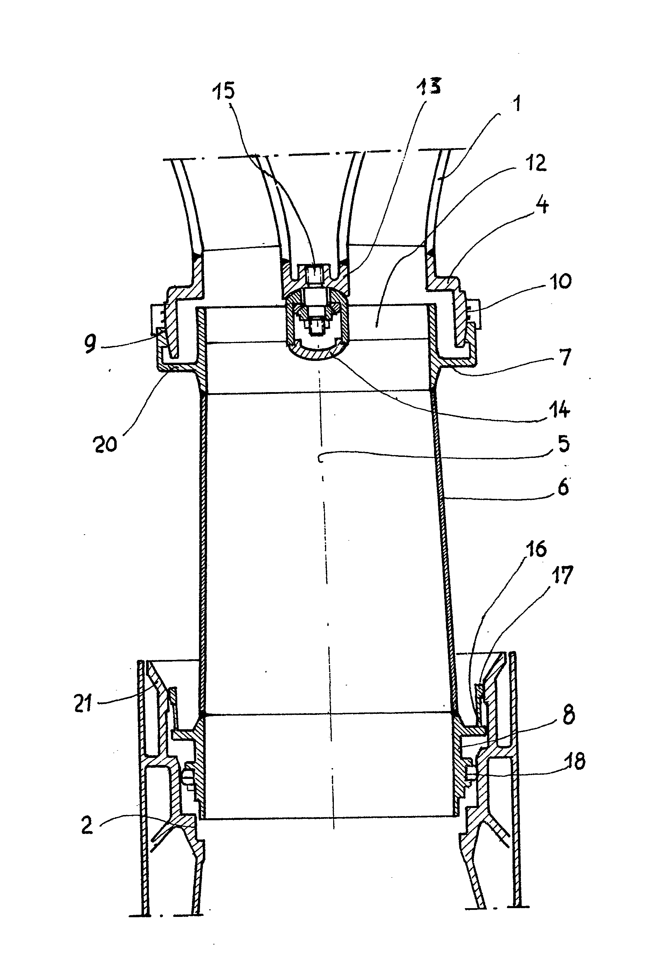

La figure unique représente une vue en coupe par un plan de symétrie du dispositif de jonction suivant l'invention disposé entre la partie inférieure d'une pompe primaire et un conduit solidaire du support de cœur.

Sur la figure unique, on voit la partie inférieure 1 de la volute d'une pompe primaire disposée à l'intérieur de la cuve d'un réacteur nucléaire à neutrons rapides refroidi par du sodium liquide.

La cuve de ce réacteur nucléaire contient également le support de cœur du réacteur sur lequel sont disposés les assemblages combustibles constituant le cœur.

Sur ce support de cœur, ou sommier, est fixé un conduit d'injection de sodium liquide à la base des assemblages dont l'extrémité d'entrée 2 est visible sur la figure.

Cette extrémité d'entrée 2 disposée verticalement débouche dans une sphère creuse sur laquelle est fixée la partie de sortie du conduit solidaire du support de cœur. Cette partie de sortie est horizontale et permet la répartition du sodium à la partie inférieure de l'ensemble du cœur.

La partie inférieure de la volute 1 est reliée à sa périphérie à un anneau de jonction 4. La partie inférieure de la volute et cet anneau 4 constituent le conduit de refoulement de la pompe.

Le dispositif de jonction entre le conduit de refoulement de la pompe et la partie d'entrée 2 du conduit solidaire du support de cœur est constitué par une manchette 6, une pièce de liaison 7 disposée du côté du conduit de refoulement de la pompe et un ensemble d'étanchéité et de maintien 8 disposé du côté du conduit solidaire du sommier.

L'ensemble du dispositif de jonction est symétrique de révolution autour de l'axe vertical 5 de la pompe.

La pièce de liaison 7 est fixée par soudure au niveau de la petite base de la manchette tronconique 6, au voisinage du conduit de refoulement de la pompe.

Cette pièce de liaison 7 comporte une partie périphérique 9 usinée suivant une surface sphérique complémentaire d'une surface sphérique usinée sur la surface externe de l'anneau 4.

Ces deux surfaces sphériques en contact assurent une étanchéité à la jonction entre le conduit de refoulement de la pompe et la manchette, grâce à un joint à labyrinthe 10 disposé entre la pièce de liaison 7 et l'anneau 4.

La pièce de liaison 7 comporte également une partie centrale reliée à la partie périphérique par l'intermédiaire d'un croisillon 12.

Cette partie centrale est constituée par la partie mobile 14 d'une liaison à rotule dont la partie fixe 13 est portée par la partie inférieure de la volute de la pompe à sa partie centrale, au voisinage de l'axe de symétrie 5. L'axe 15 de cette liaison à rotule est fixé à la partie centrale taraudée de la pièce fixe 13 de l'articulation.

La manchette tronconique 6 est évasée depuis son extrémité d'entrée au voisinage de la sortie du conduit de refoulement jusqu'à son extrémité de sortie au voisinage de l'extrémité d'entrée du conduit solidaire du sommier.

L'ensemble d'étanchéité et de maintien 8 est fixé à l'extrémité de la manchette 6, au niveau de sa grande base, et comporte un anneau sur lequel sont fixés d'une part des secteurs tronconiques élastiques 16 portant à leurs extrémités des appuis sphériques 17 et d'autre part un ensemble de segments d'étanchéité 18.

L'extrémité de la manchette 6 et l'anneau 8 pénètrent à l'intérieur de l'entrée du conduit 2 qui est d'un diamètre supérieur au diamètre de la grande base de la manchette 6.

Les segments 18 sont intercalés entre l'anneau 8 et la surface interne du conduit 2, alors que les secteurs élastiques 16 sont en appui par l'intermédiaire des pièces sphériques 17 sur des surfaces usinées localement suivant une forme sphérique et solidaires du conduit 2.

On voit que l'extrémité de sortie de la manchette 6 et l'anneau 8 sont libres de se déplacer dans la direction de l'axe 5 à l'intérieur de l'entrée du conduit 2.

Lorsque du sodium liquide circule à l'intérieur de la manchette 6 à la sortie du conduit de refoulement de la pompe, la surpression de ce sodium par rapport au sodium contenu dans la cuve est responsable de forces s'exerçant sur la paroi de la manchette et dont la résultante est une force de direction axiale dirigée vers la pompe. La liaison articulée centrale 13-14 permet de résister à cette force axiale.

D'autre part, entre la partie périphérique de la pièce de liaison 7 et la partie de jonction de cette pièce sur la manchette 6 au niveau de sa petite base, il existe une surface annulaire 20 perpendiculaire à l'axe 5 sur laquelle s'exerce la pression du sodium liquide refoulé par la pompe.

Cette pression crée une force axiale opposée à la force créée par la pression du sodium à l'intérieur de la manchette 6.

Dans le mode de réalisation représenté sur la figure, ces deux forces s'annulant si bien que l'équilibre de la manchette est totalement indifférent dans la direction axiale, pendant le fonctionnement de la pompe.

Les efforts transversaux s'exerçant sur le dispositif de jonction peuvent produire un déplacement de celui-ci de façon à ce qu'il présente une inclinaison par rapport à l'axe 5.

L'ensemble des liaisons articulées permet ce déplacement et les surfaces d'étanchéité complémentaires portées par la manchette et les conduits auxquels elle est reliée, permet une réalisation de ces déplacements tout en assurant une continuité parfaite de l'écoulement du sodium liquide.

Le dispositif de jonction ne subit donc pas de contraintes excessives ni dans la direction axiale ni dans les directions transversales. Cependant, la jonction est toujours assurée de façon parfaite.

D'autre part les dilatations tant longitudinales que transversales sont possibles sans que le dispositif de jonction subisse des contraintes importantes.

Les déplacements transversaux sont d'autre part limités grâce à l'élasticité des secteurs 16 entourant complètement l'extrémité de la manchette et assurant un recentrage et un maintien latéral de celle-ci.

Une rampe d'introduction tronconique 21 permet un montage facile de la manchette à l'intérieur du conduit 2.

On voit que les principaux avantages du dispositif selon l'invention sont de permettre une jonction parfaite entre le conduit de refoulement de la pompe et le conduit solidaire du sommier support de cœur du réacteur tout en rendant possibles les dilatations et les déplacements sous l'effet de sollicitations diverses de ce dispositif de jonction, évitant par là l'apparition de contraintes excessives.

D'autre part, un équilibrage des forces axiales est possible en modifiant le diamètre de la partie périphérique de la pièce de liaison 7.

On peut ainsi obtenir un système totalement équilibré comme celui qui vient d'être décrit ou, au contraire, un système où la résultante des forces axiales est dirigée vers la pompe ou au contraire dirigée vers le sommier.

La suspension et l'accrochage du dispositif de jonction, par une liaison articulée disposée à sa partie centrale, permet des déplacements sous l'effet des forces transversales tout en assurant un maintien parfait du dispositif de jonction dans la direction longitudinale.

L'invention ne se limite pas au mode de réalisation qui vient d'être décrit.

C'est ainsi que pour le dispositif articulé d'accrochage de la manchette au conduit de refoulement de la pompe, on peut utiliser un autre moyen de liaison articulée qu'une rotule.

On peut également imaginer de réaliser la pièce de jonction 7 sous une autre forme, la surface d'équilibrage 20 de la manchette pouvant être réalisée sous une forme différente d'une forme annulaire.

On peut également imaginer une autre forme de réalisation de l'ensemble d'étanchéité et de maintien 8, le dispositif élastique intercalé entre l'extrémité de la manchette et le sommier pouvant être réalisé sous une forme différente d'un ensemble de secteurs tronconiques.

Enfin, le dispositif de jonction suivant l'invention peut être utilisé dans tous les cas où une pompe primaire d'un réacteur nucléaire à neutrons rapides refroidi par un métal liquide est utilisée pour injecter ce métal liquide dans un conduit solidaire d'une partie fixe du réacteur.

**Revendications**

1. Dispositif de jonction entre le conduit de refoulement d'une pompe primaire et un conduit solidaire du support de cœur d'un réacteur nucléaire à neutrons rapides refroidi par un métal liquide, le métal liquide constituant le fluide primaire du réacteur étant envoyé à la base du cœur par des pompes primaires qui injectent ce métal liquide dans des conduits solidaires du support de cœur, pour son refroidissement, caractérisé par le fait qu'il comporte :

— une manchette (6) de forme tronconique disposée dans le prolongement du conduit de refoulement de la pompe dont la petite base est située au voisinage de la sortie du conduit de refoulement et la grande base au voisinage de l'entrée du conduit (2) solidaire du support de cœur,

— une pièce de liaison (7) solidaire de la manchette (6) au niveau de sa petite base et symétrique de révolution autour de l'axe de la manchette (6) portant à sa partie centrale au voisinage de l'axe de symétrie (5) la partie mobile (14) d'un moyen de liaison articulée dont la partie fixe (13) est portée par la pompe permettant à la fois des débattements latéraux et le maintien de la manchette (6) sur le conduit de la pompe malgré les efforts axiaux, la partie périphérique de la pièce de liaison (7) d'un diamètre supérieur au diamètre de la petite base de la manchette (6) présentant une surface sphérique (9) symétrique autour de l'axe (5) de la manchette (6) complémentaire d'une surface correspondante usinée à l'extrémité du conduit de refoulement de la pompe, l'étanchéité entre ces deux surfaces disposées l'une contre l'autre étant assurée par un joint à labyrinthe (10) cependant que la pression du métal liquide refoulé par la pompe s'exerçant sur la partie de cette pièce de liaison (7) comprise entre sa partie périphérique et sa partie fixée à la manchette (6) permet d'exercer une force de direction axiale sur la manchette (6),

— un dispositif d'étanchéité (18) intercalé entre l'extrémité de sortie de la manchette (6) et le conduit (2) solidaire du support de cœur dont l'extrémité, sur laquelle est engagée l'extrémité de sortie de la manchette (6), est d'un diamètre différent de celui de l'extrémité de la manchette,

— et un moyen élastique (16) intercalé entre l'extrémité de sortie de la manchette (6) et une pièce d'appui solidaire du support de cœur, sur toute la périphérie de la manchette (6) pour le maintien latéral de cette manchette dont l'extrémité de sortie peut se déplacer librement dans la direction axiale par rapport au conduit (2) solidaire du support de cœur.

2. Dispositif de jonction suivant la revendication 1, caractérisé par le fait que le moyen élastique (16) est constitué par un ensemble de secteurs de forme tronconique solidaires de la manchette (6) à l'une de leurs extrémités et portant à leur autre extrémité une pièce d'appui sphérique (17) venant en contact sur une surface sphérique correspondante de la pièce d'appui solidaire du support de cœur.

3. Dispositif de jonction suivant l'une quelconque des revendications 1 et 2, caractérisé par le fait que le moyen de liaison articulée disposé à la partie centrale de la pièce de liaison (7) est constitué par une rotule (14, 13) dont l'axe de rotation (15) est parallèle à l'axe de symétrie (5).

## Claims

1. Device for joining the delivery conduit of a primary pump and a conduit fixed integrally to the core support of a fast neutron nuclear reactor cooled with a liquid metal, the liquid metal forming the primary fluid of the reactor being conveyed to the base of the core by primary pumps which inject this liquid metal into conduits integrally fixed to the core support, in order to cool it, characterised in that it comprises :
— a sleeve (6) of a frustoconical shape arranged in the extension of the delivery conduit of the pump, whose small base is situated close to the outlet of the delivery conduit and the large base close to the inlet of the conduit (2) integrally fixed to the core support,
— a connector (7) integrally fixed to the sleeve (6) in the region of its small base and symmetrical in revolution around the axis of the sleeve (6), carrying in its middle part close to the axis of symmetry (5) the movable part (14) of a means of articulated connection the fixed part (13) of which is carried by the pump permitting both side clearances and the retention of the sleeve (6) on the pump conduit despite the axial forces, the peripheral part of the connector (7) with a diameter greater than the diameter of the small base of the sleeve (6), having a spherical surface (9) symmetrical around the axis (5) of the sleeve (6) complementing a corresponding surface machined at the end of the delivery conduit of the pump, the leaktightness between these two surfaces arranged against each other being provided by a labyrinth seal (10) while the pressure of the liquid metal delivered by the pump which is exerted on the part of this connector (7) comprised between its peripheral part and its part fixed to the sleeve (6) makes it possible to exert a force in an axial direction on the sleeve (6),
— a sealing device (18) inserted between the outlet end of the sleeve (6) and the conduit (2) fixed integrally to the core support whose end on which the outlet end of the sleeve (6) is engaged has a diameter which is different from that of the end of the sleeve, and
— an elastic means (16) inserted between the outlet end of the sleeve (6) and a bearing component fixed integrally to the core support, over the whole periphery of the sleeve (6) for holding laterally this sleeve the outlet end of which can move freely in the axial direction relative to the conduit (2) fixed integrally to the core support.

2. Joining device according to Claim 1, characterised in that the elastic means (16) consists of a set of sections of frustoconical shape fixed integrally to the sleeve (6) at one of their ends and carrying at their other end a spherical supporting member (17) coming into contact with a corresponding spherical surface of the bearing member fixed integrally to the core support.

3. Joining device according to either one of Claims 1 and 2, characterised in that the means for articulated connection arranged in the central part of the connector (7) consists of a spherical joint (14, 13) whose axis of rotation (15) is parallel to the axis of symmetry (5).

## Ansprüche

1. Verbindungsvorrichtung zwischen der Druckleitung einer Primärpumpe und einer an der Kernabstützung eines mit einem Flüssigmetall gekühlten Schnellneutronenreaktors befestigten Leitung, wobei das das Reaktorprimärmedium bildende Flüssigmetall zur Kühlung des Reaktorkerns dessen Unterteil mittels Primärpumpen zugeführt wird, die das Flüssigmetall in die an der Kernabstützung befestigten Leitungen einspritzen, dadurch gekennzeichnet, dass sie folgende Teile umfasst :
— eine in der Verlängerung der Pumpendruckleitung liegende kegelstumpfartige Manschette (6), deren Deckfläche unmittelbar am Austritt der Druckleitung und die Grundfläche unmittelbar am Eingang der an der Kernabstützung befestigten Leitung (2) angeordnet sind ;
— ein an der Manschette (6) bei deren Deckfläche befestigtes und um die Achse der Manschette (6) umlaufsymmetrisches Verbindungsstück (7), das an seinem mittigen Teil in der Nähe der Symmetrieachse (5) das bewegliche Teil (14) eines gelenkigen Verbindungsmittels trägt — das feststehende Teil (13) ist durch die Pumpe abgestützt — wodurch gleichzeitig seitliche Ausschläge und das Halten der Manschette (6) auf der Pumpenleitung trotz der Axialkräfte möglich sind, wobei das einen grösseren Durchmesser als der Durchmesser der Deckfläche der Manschette (6) aufweisendes Peripherieteil des Verbindungsstückes (7) eine um die Achse (5) der Manschette (6) symmetrische Kugelfläche (9) umfasst, die zu einer am Ende der Pumpendruckleitung entsprechend bearbeiteten Fläche komplementär ist — die Abdichtung zwischen den beiden gegenüberliegenden Flächen ist durch eine Labyrinthdichtung (10) gewährleistet — während der auf das Teil dieses Verbindungsstückes (7) zwischen dessen Peripherieteil und dessen an der Manschette (6) befestigtes Teil wirkende Druck des durch die Pumpe verdrängten Flüssigmetalls die Ausübung einer Kraft in Axialrichtung auf die Manschette (6) zulässt ;

— eine zwischen dem Austrittsende der Manschette (6) und der an der Kernabstützung befestigten Leitung eingefügte Abdichtungsvorrichtung (18), wobei deren das Austrittsende der Manschette (6) aufnehmende Ende einen von dem Durchmesser des Manschettenendes unterschiedlichen Durchmesser aufweist ;

— sowie zum seitlichen Halten der Manschette ein über die gesamte Peripherie der Manschette (6) zwischen dem Austrittsende der Manschette (6) und einem an der Kernabstützung befestigten Auflageteil eingefügtes elastisches Mittel (16), wobei das Austrittsende der Manschette zu der an der Kernabstützung befestigten Leitung (2) in Axialrichtung frei beweglich ist.

2. Verbindungsvorrichtung nach Anspruch 1, dadurch gekennzeichnet, dass das elastische Mittel (16) aus einem Satz kegelstumpfartiger Sektoren besteht, die mit einem Ende an der Manschette (6) befestigt sind und an ihrem anderen Ende ein kegelförmiges Auflageteil (17) tragen, das auf einer entsprechenden Kegelfläche des an der Kernabstützung befestigten Auflageteils zur Anlage kommt.

3. Verbindungsvorrichtung nach einem der Ansprüche 1 und 2, dadurch gekennzeichnet, dass das an dem mittigen Teil des Verbindungsstückes (7) angeordnete gelenkige Verbindungsmittel aus einem Kugelgelenk (14, 13) besteht, dessen Rotationsachse (15) parallel zur Symmetrieachse (5) verläuft.